# EUROPEAN PATENT SPECIFICATION

(11) **EP 2 245 383 B1**
(45) Date of publication and mention of the grant of the patent: **10.07.2019**
(21) Application number: 09701017.7
(22) Date of filing: 09.01.2009
(51) Int. Cl.: E04D 13/18, E04D 12/00, F24S 10/70, F24S 25/00, F24S 20/00, F24S 20/67, F24S 10/50

(54) **METHOD OF INSTALLING A COLLECTION SYSTEM FOR HEAT ENERGY**
VERFAHREN ZUR INSTALLATION EINES SAMMELSYSTEMS FÜR WÄRMEENERGIE
METHODE D'INSTALLATION D'UN SYSTÈME DE COLLECTE D'ÉNERGIE THERMIQUE

(30) Priority: 10.01.2008 FI 20080020
(43) Date of publication of application: 03.11.2010
(73) Proprietor: Setälä, Seppo, 33300 Tampere (FI)
(72) Inventor: Setälä, Seppo, 33300 Tampere (FI)
(74) Representative: Kolster Oy Ab
(86) International application number: PCT/FI2009/000004
(87) International publication number: WO 2009/087267

(56) References cited:
- WO-A1-2007/148976
- DE-A1- 3 125 414
- DE-A1- 10 320 494
- FR-A1- 2 531 193
- JP-A- S5 719 555
- US-A- 4 008 708
- US-A- 4 201 193
- US-A- 4 355 064
- US-A1- 2002 046 764
- US-A1- 2002 046 764

## Description

This invention relates to a method of installing a collection system of heat energy of the sun which collection system is intended to be installed on a surface that receives solar energy, especially to a coating material that is to be installed on a roof to which system pipe systems, which can be installed on the mentioned surface and which collect solar energy, belong; they include heat collecting medium that can be circulated with the help of a pump and include a circulation system with its adjusting device for the mentioned heat collecting medium.

Previously a collecting carpet is known from the publication GB 2045423 as a collection system of the solar energy in which publication a double-layered carpet, which is formed of profiled parts of the carpet, is shown whereupon when the carpets are being joined together, two longitudinal flow channels are formed to their interspace and between them smaller cross channels that join the mentioned channels are formed. A collector unit is not intended to be a part of the roof structure and it has not been shown how the flow agent can be directed from the channels of the collector carpet to the circulation system of the system. Also the channels of the flow agent are formed to the carpet material itself.

A pipe system that can be adjusted inside the tiles of the tile roof is known from the publication EP 0043095 whereupon the tiles comprise holes in their longitudinal direction through which plastic pipes have been adjusted that act as flow pipes for the collection liquid of the energy. In the publication it has not been clarified how the flow agent can be directed into the pipes located inside the tiles and away from there. Installation of the pipes inside the tiles is difficult because of a difficult adjusting work.

Furthermore, US 2002/0046764 discloses a collection system for heat energy of the sun according to the preamble of claim 1.

In order to eliminate the above mentioned disadvantages a new method of installing a collection system for heat energy has been developed with which collection system an unexpected improvement can be achieved in relation to the previous technique. It is characteristic for the method according to the invention what is disclosed in claim 1.

The advantage of the method according to the invention is the fact that a collector of the solar energy can be formed to the coating or the under coating whereupon there is no need for a separate installation of the collector. The collector cannot be seen from outside whereupon it does not cause any changes in the exterior features and does not have an effect on the architectural solutions. The coating becomes uniform because the collector part cannot be seen from outside in any way. It can also be installed on a bent surface. Underneath a tin coating the coating material acts as a base layer membrane and as a sound insulator. Being a roll product the coating material is cheap to manufacture, easy to transport at the construction site and fast to spread onto surfaces. The coating material is possible to deliver also as a material that has been cut to length and possible to install especially to be base layer. Due to flexible and bendable materials their different heat extensions do not damage the structure. Transparent protective surfaces, which are located in conventional solar collectors known as such, are not needed and there is no need to make inlets to the actual surface layer of the roof.

In the following the invention is described more detailed by referring to the accompanying drawing in which
Figure 1 shows a collection system being installed to be a base layer membrane of the felt roof.
Figure 2 shows a part of the coating material that can be rolled out according to the invention whereupon the pipe channels are exposed at the end of the coating material.
Figure 3 shows the roof structure as a side view.

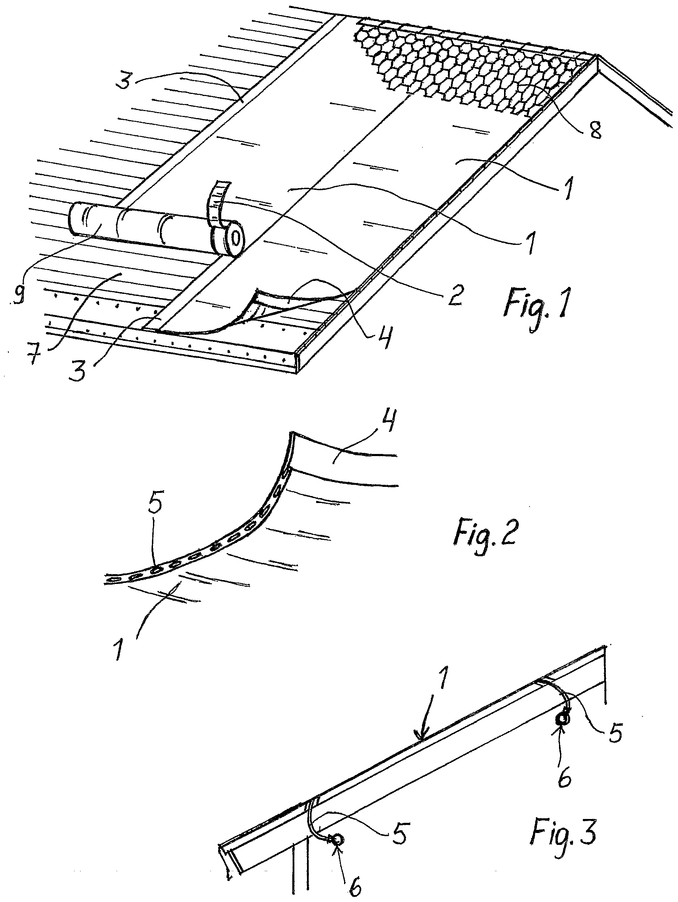

In figure 1 a part of the roof of the house is shown in which figure installation of the coating material 1 according to the invention to be base layer on top of the fixed boarding 7. Felt paving 8 acts as the top layer. A roofing felt roll acts as the base layer membrane 1 inside which roofing felt roll there is a recovery pipe system 5 of energy according to the invention. The structure of the base layer material 1 is a conventional roofing felt roll that can be unwound from a roll onto the roof. The roofing felt roll has a joint 3 at its edge with which the edge of the next roll is placed overlapping. While the roll is being unwound from the roll the strip 2, which has covered the glued part, is torn away. Placing of the collector pipe system 5 into the coating material 1 cannot be seen from outside. Due to the bendable structure the coating material 1 according to the invention can be installed also to curvilinear surfaces. In addition to roofs it can be installed also onto other surfaces, such as walls.

The portion shown in the figure 2 shows the bottom of the base layer material 1 in which figure the location of the pipes 5 inside the material can be seen. The edge 4 of the coating material 1 is set overlapping to the edge 3 of the previous roll. The coating material comprises a fabric support according to a conventional roofing felt. Pipes 5 are partly flattened inside the material or their cross-sectional profile is elliptical or elongated whereupon they do not thicken much the thickness of the material. The flattened form of the pipe 5 is advantageous in relation to the heat transfer from the coating material 1 into the pipe 5 when the flat form boosts the heat transfer from the surface of the coating into the pipe 5. Because the pipe is bendable the profiles that differ from the round form in relation to their cross section can be adjusted to the round form at those locations where joining lines are created to the pipe 5 with the help of a pipe connectors.

According to a solution the pipe 5 is not attached to the coating material in any adhesive way and not permanently because the pipe 5 must be drawn out unbroken from the material for the connections through a cut made to its bottom or with the help of a possible tearing. The pipe 5 stays at the coating material even though it had not been attached to the material mass.

In figure 3 the needed pipe lengths are shown drawn out to the attic room from the bottom of the coating material 1. This step has to be done at the same time as the coating material is being installed. Cuts that ease the tearing are made to the bottom of the coating material 1 at the location of the pipes 5 without damaging the pipes 5 and through the cuts the pipes 5 are drawn out for the connections. There are distributor pipes 6 underneath the roof structure to which distributor pipes each pipe 5 is attached in a known connection way, like by using crimp connectors. It is advantageous that the heat transfer liquid of the circulation system is pumped to the lower distributor pipe 6 and is taken out when it is heated up from the upper pipe. The connections to the distributor pipes 6 are made at the attic underneath the roof. The ends of the pipes 5 are directed from the coating material to this room and due to this in this case the whole steep length of the roof is not used as a collector surface. The steep surface can easily be used as a collector surface up to the ridge when at the upper end the coating 1 is directed over the ridge and the pipes 5 are taken out from it at the location of the ridge.

In order to boost the absorption of the radiation of the sun, a selective coating or a membrane, such as polymer, can be placed onto the surface of the material which membrane reduces the reflection of the radiation of the sun back both from the surface of the polymer and from the surface underneath the polymer which surface absorbs radiation.

## Claims

1. Method of installing a collection system for heat energy of the sun that is installed onto a surface that receives solar energy, the collection system consisting of a coating material (1) that is installed on a roof, pipe systems (5), which collect solar energy and are installed on the mentioned surface, heat collecting medium that is circulated with the help of a pump in pipe systems, and a circulation system with its adjusting device for the mentioned heat collecting medium, and that heat collector pipe systems (5) are adjusted to the coating material (1) that is unwound from a roll (9) or cut to length in such a way that separate pipe systems (5) in relation to the coating material are located inside the coating material in the opening direction of the roll (9) or in a longitudinal direction in relation to the coating material that is cut to length, **characterized in that** the pipe systems (5) are at a partly flattened stage or their cross section profiles are elliptical or elongated inside the coating material (1) and when being drawn out of the coating material they are adjusted to be round in order to create a joining line.

2. Method according to the claim 1, **characterized in that** the collector pipe system (5) is located inside a bendable coating material (1), such as a roofing felt roll.

3. Method according to the claim 1, **characterized in that** the collector pipe (5) is detached from inside the coating material through its bottom for example through a cut or by tearing done to it in order to create a joining line to the pipe (5).

4. Method according to the claim 1, **characterized in that** the coating material (1) is placed onto a covered surface in an upward direction and the connecting parts from the pipes (5) are drawn out from the bottom edge and the upper edge of the coating material (1).

5. Method according to the claim 1, **characterized in that** the coating material (1) is placed onto the covered surface in a landscape orientation and the connecting parts from the pipes (5) are drawn out at a desired distance from each other.

## Patentansprüche

1. Verfahren zum Installieren eines Kollektorsystems für die Wärmeenergie der Sonne, das auf einer Oberfläche installiert ist, die Sonnenenergie empfängt, wobei das Kollektorsystem besteht aus: einem Beschichtungsmaterial (1), das auf einem Dach installiert ist, Rohrsystemen (5), die Sonnenenergie aufnehmen und auf der erwähnten Oberfläche installiert werden, ein Wärmeaufnahmemedium, das mit Hilfe einer Pumpe in Rohrsystemen umgewälzt wird, und ein Umwälzsystem mit seiner Einstellvorrichtung für das erwähnte Wärmeaufnahmemedium, wobei die Wärmeaufnahmerohrsysteme (5) auf das von einer Rolle (9) abgewickelte Beschichtungsmaterial (1) eingestellt oder derart abgelängt werden, dass in Bezug auf das Beschichtungsmaterial getrennte Rohrsysteme (5) im Inneren des Beschichtungsmaterials in Öffnungsrichtung der Rolle (9) oder in Längsrichtung in Bezug auf das abgelängte Beschichtungsmaterial angeordnet werden, **dadurch gekennzeichnet, dass** die Rohrsysteme (5) teilweise abgeflacht sind oder ihre Querschnittsprofile elliptisch sind oder innerhalb des Beschichtungsmaterials (1) länglich sind und beim Herausziehen aus dem Beschichtungsmaterial so eingestellt werden, dass sie rund sind, um eine Verbindungsleitung auszubilden.

2. Verfahren nach Anspruch 1, **dadurch gekennzeichnet, dass** sich das Aufnahmerohrsystem (5) innerhalb eines biegbaren Beschichtungsmaterials (1), wie etwa einer Dachpapenrolle befindet.

3. Verfahren nach Anspruch 1, **dadurch gekennzeichnet, dass** das Aufnahmerohr (5) von innerhalb des Beschichtungsmaterials durch seine Unterseite beispielsweise durch einen Einschnitt oder durch Zerreißen gelöst wird, um eine Verbindungsleitung mit dem Rohr (5) zu erzeugen.

4. Verfahren nach Anspruch 1, **dadurch gekennzeichnet, dass** das Beschichtungsmaterial (1) nach oben auf eine abgedeckte Fläche aufgelegt wird und die Verbindungsteile aus den Rohren (5) von dem unteren Rand und dem oberen Rand des Beschichtungsmaterials (1) herausgezogen werden.

5. Verfahren nach Anspruch 1, **dadurch gekennzeichnet, dass** das Beschichtungsmaterial (1) im Querformat auf die abgedeckte Fläche aufgelegt wird und die Verbindungsteile aus den Rohren (5) in einem gewünschten Abstand voneinander herausgezogen werden.

## Revendications

1. Procédé d'installation d'un système de collecte d'énergie thermique du soleil qui est installé sur une surface recevant de l'énergie solaire, le système de collecte consistant en un matériau de revêtement (1) qui est installé sur un toit, des systèmes de tuyau (5), qui collectent de l'énergie solaire et sont installés sur la surface mentionnée, un milieu de collecte de chaleur qui est mis en circulation à l'aide d'une pompe dans des systèmes de tuyau, et un système de circulation avec son dispositif de réglage pour le milieu de collecte de chaleur mentionné, et lesquels systèmes de tuyau collecteurs de chaleur (5) sont ajustés sur le matériau de revêtement (1) qui est déroulé d'un rouleau (9) ou coupé sur une longueur de manière à ce que des systèmes de tuyau séparés (5) par rapport au matériau de revêtement soient situés à l'intérieur du matériau de revêtement dans la direction d'ouverture du rouleau (9) ou dans une direction longitudinale par rapport au matériau de revêtement qui est coupé sur une longueur, **caractérisé en ce que** les systèmes de tuyau (5) se trouvent à un stade partiellement aplati ou leurs profils en coupe transversale sont elliptiques ou allongés à l'intérieur du matériau de revêtement (1) et lorsqu'ils sont étirés du matériau de revêtement, ils sont ajustés pour être arrondis afin de créer une ligne de jonction.

2. Procédé selon la revendication 1, **caractérisé en ce que** le système de tuyau collecteur (5) est situé à l'intérieur d'un matériau de revêtement pliable (1), tel qu'un rouleau de feutre pour toiture.

3. Procédé selon la revendication 1, **caractérisé en ce que** le tuyau collecteur (5) est détaché de l'intérieur du matériau de revêtement par l'intermédiaire de son fond par exemple par une découpe ou par une déchirure réalisée pour créer une ligne de jonction avec le tuyau (5).

4. Procédé selon la revendication 1, **caractérisé en ce que** le matériau de revêtement (1) est placé sur une surface recouverte dans une direction vers le haut et les parties de raccordement des tuyaux (5) sont étirées à partir du bord inférieur et du bord supérieur du matériau de revêtement (1).

5. Procédé selon la revendication 1, **caractérisé en ce que** le matériau de revêtement (1) est placé sur la surface couverte dans une orientation en paysage et les parties de raccordement des tuyaux (5) sont étirées à une distance souhaitée les uns des autres.
